# EUROPEAN PATENT SPECIFICATION

(11) **EP 1 908 629 B1**
(45) Date of publication and mention of the grant of the patent: **21.05.2014**
(21) Application number: 07253678.2
(22) Date of filing: 17.09.2007
(51) Int. Cl.: B60Q 1/00, B62J 6/02

(54) **Headlight device and vehicle**
Scheinwerfervorrichtung und Fahrzeug
Dispositif de phare et véhicule

(30) Priority: 29.09.2006 JP 2006269996
(43) Date of publication of application: 09.04.2008
(73) Proprietor: Yamaha Hatsudoki Kabushiki Kaisha, Shizuoka-ken Shizuoka 438-8501 (JP)
(72) Inventor: Aoki, Yasushi, Samutprakarn 10540 (TH)
(74) Representative: Moreland, David

(56) References cited:
- EP-A- 0 961 074
- DE-A1- 19 838 911
- FR-A- 2 787 864
- JP-A- 10 214 504
- US-A1- 2003 012 030

## Description

### FIELD OF THE INVENTION

The present invention relates to a headlight device according to claim 1, and a vehicle provided with the headlight device.

### BACKGROUND TO THE INVENTION

In a vehicle, such as motorcycle, a headlight device is provided on the front of the vehicle, that is, forwardly of a handle, or the like.

Known headlight devices include a plurality of light sources, for example, two bulbs are used, such as disclosed in, for example, Japanese Utility Model Registration No. 2526760. With such a known headlight device, two lamp bodies including a reflector and a front lens are arranged in alignment in a vehicle width direction and bulbs, respectively, are mounted substantially centrally of the respective lamp bodies.

However, the conventional headlight device described above involves the following problem. That is, the headlight device using a plurality of light sources (bulbs) is increased in power consumption as compared with a headlight device, which uses a single light source. Therefore, small-sized motorcycles, etc. cannot mount, in some cases, a headlight device having a plurality of bulbs because of performance limitations on an associated power system, such as a battery and alternator.

US2003/0012030 describes a headlamp configuration in which a headlamp comprises a lamp housing, wherein the headlamp is constituted by a light source and a reflector. A partition section is provided in the effective luminous region of the headlamp chamber in a vertical direction and facing a lamp lens. The partition section is provided in a non-light passing inner panel arranged within the lamp chamber. The inner panel effectively separates the headlamp such that the lamp chamber looks like a simulated multiple light lamp in which the lamp is divided into a plurality of lamps horizontally.

The invention has among its objects to provide a headlight device which provides the appearance of a lamp body using a plurality of light sources, while a single light source is used, and a vehicle provided with the headlight device.

### SUMMARY OF THE INVENTION

According to a first aspect of the present invention there is provided a headlight device comprising:
a light source;
a lamp body including a reflector for reflecting light radiated from the light source;
a front lens arranged forwardly of the light source; and
a shielding wall for shielding at least one of light radiated from the light source and light reflected by the reflector, wherein the shielding wall is arranged between the front lens and the reflector,
along an inner side of the front lens, the shielding wall is attached to the front lens and the shielding well is gradually increased in width toward the upper portion from the lower portion.

According to a second aspect of the present invention there is provided a headlight device comprising a light source, and a lamp body including a reflector, which reflects light radiated from the light source, and a front lens arranged forwardly of the light source in a state of being mounted on a vehicle, and further comprising a shielding wall, which shields at least one of light radiated from the light source and light reflected by the reflector, and wherein the shielding wall is arranged between the front lens and the reflector.

With the headlight device, the shielding wall is arranged between the front lens and the reflector, so that the light source may be made hard to visually recognize from the front of the headlight device. Also, since the shielding wall is arranged between the front lens and the reflector, it is possible to have the headlight device visually recognized as if it were formed from a lamp body, which uses a plurality of light sources.

That is, with the headlight device, it is possible to have it visually recognized as if it had a lamp body using a plurality of light sources, while a single light source is used.

The shielding wall is arranged between the front lens and the light source.

The shielding wall may be arranged on the front of the light source.

The light source may be arranged substantially centrally of the lamp body in a widthwise direction.

The shielding wall is arranged along an inner side of the front lens.

The lamp body may extend in a vehicle width direction in a state, in which the headlight device is mounted on the vehicle, and a width of an upper portion of the shielding wall in the vehicle width direction is larger than a width of a lower portion of the shielding wall in the vehicle width direction.

The shielding wall is gradually increased in width toward the upper portion from the lower portion.

A rear end of the shielding wall may be positioned rearwardly of a front end of the reflector.

The shielding wall may comprise a heat-resistant material to withstand heat generated from the light source.

The front lens may be formed on an inner side thereof with an inner recess, which may be concave toward the front, and the shielding wall may enter into the inner recess.

The headlight device may further comprise an outer periphery cover arranged along an outer periphery of the front lens, the outer periphery cover may include a lens cover portion arranged outside the front lens and forwardly of the shielding wall, an outer recess may be formed on an outer side of the front lens to be concave rearward, and the lens cover portion may enter into the outer recess.

The shielding wall may include, in cross section along the vehicle width direction, a pair of longitudinal wall portions extending in a longitudinal direction and a widthwise wall portion provided between the pair of longitudinal wall portions to connect between central portions of the longitudinal wall portions in the longitudinal direction.

The headlight device may further comprise an auxiliary lamp, and the auxiliary lamp may be arranged outside the lamp body.

The auxiliary lamp may include an auxiliary light source, and an outer reflector provided outside the reflector to reflect light of the auxiliary light source.

An inner partition portion may be provided at a boundary of the reflector and the outer reflector to partition the reflector and the outer reflector, and a predetermined clearance may be defined between the inner partition portion and an inner side of the front lens.

The headlight device may further comprise a direction indicator lamp, which indicates a traveling direction of the vehicle, the direction indicator lamp may be arranged outside the auxiliary lamp, an outer partition portion may be provided at a boundary of the direction indicator lamp and the auxiliary lamp to partition the direction indicator lamp and the auxiliary lamp, and a height of the outer partition portion may be larger than a height of the inner partition portion.

According to a third aspect of the present invention there is provided a vehicle comprising a headlight device according to the first or second aspects.

According to the invention, it is possible to provide a headlight device capable of being visually recognized as if it had a lamp body using a plurality of light sources, while a single light source is used, and a vehicle provided with the headlight device.

### BRIEF DESCRIPTION OF THE DRAWINGS

These and other aspects of the present invention will now be described, by way of example only, with reference to the accompanying drawings, in which:
Fig. 1 is a left side view showing a motorcycle according to an embodiment of the invention;.
Fig. 2 is a front view showing a handle assembly including a headlight device according to the embodiment of the invention;
Fig. 3 is an exploded, perspective view showing the headlight device according to the embodiment of the invention;
Fig. 4 is a cross sectional view taken along the line F4-F4 in Fig. 2;
Fig. 5 is a cross sectional view taken along the line F5-F5 in Fig. 2; and
Fig. 6 is a plan view showing the headlight device according to the embodiment of the invention.

### DETAILED DESCRIPTION OF THE DRAWINGS

An embodiment of a vehicle according to the invention will now be described with reference to the drawings. The same or similar parts in the following figures are denoted by the same or similar reference numerals. However, it should be kept in mind that the drawings are schematic and ratios of respective dimensions are different from actual ones. Accordingly, specific dimensions, etc. should be determined taking the following descriptions into consideration. Also, there are of course included parts, of which dimensional relationships and ratios are different from one another among the figures.

### (1) Whole schematic construction

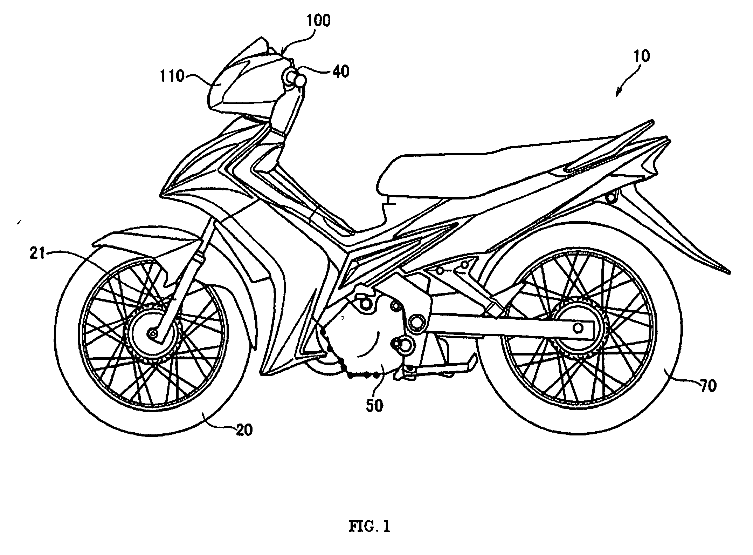

Fig. 1 is a left side view showing a motorcycle 10 according to an embodiment of the invention. As shown in Fig. 1, the motorcycle 10 is a so-called under-bone type motorcycle, in which a body frame (not shown) is arranged in a lower region as compared with a general saddle-type motorcycle.

The motorcycle 10 includes a front wheel 20 and a rear wheel 70 and a driving force generated by an engine 50 drives the rear wheel 70.

The motorcycle 10 includes a pair of left and right front forks 21 which rotatably support the front wheel 20. Specifically, the front forks 21 permit the front wheel 20 to move (linear motion) in a vertical direction (actually, a direction defined with a predetermined caster angle) according to a change in a road surface state to absorb a shocks which the front wheel 20 receives.

A handle assembly 100 is provided above the front forks 21. The handle assembly 100 comprises a handle 40, which a rider manipulates in order to change a direction of the front wheel 20, a headlight unit 110, etc.

### (2) Construction of a headlight device

An explanation will now be given of the construction of the headlight unit 110, which constitutes a headlight device of an embodiment of the present invention.

### (2.1) Whole construction

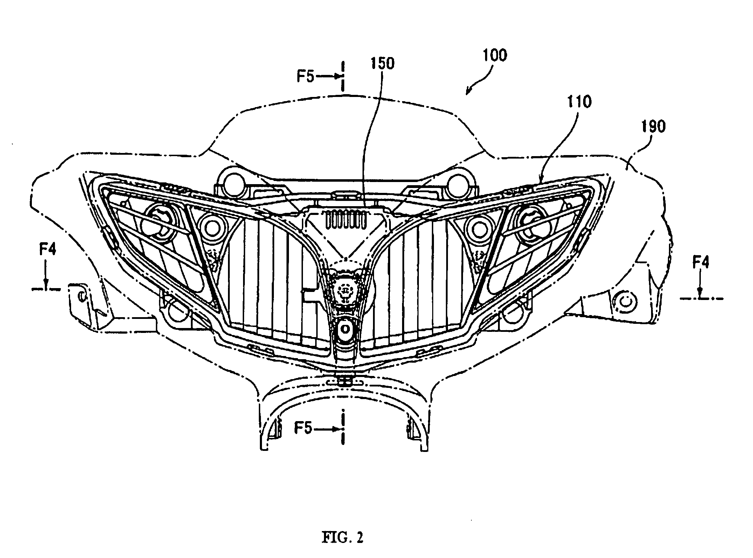

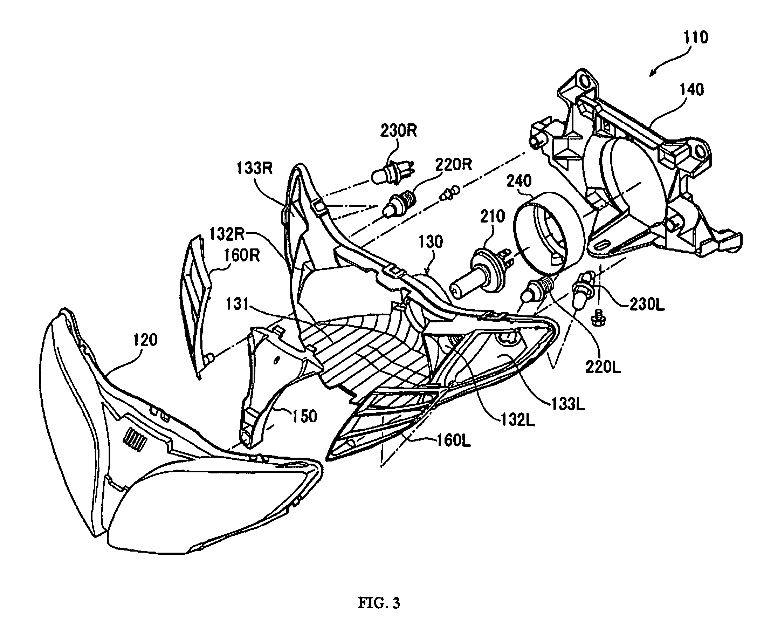

Fig. 2 is a front view showing the handle assembly 100 including the headlight unit 110. As shown in Fig. 2, the handle assembly 100 includes the headlight unit 110 and a handle cover 190 arranged outside the headlight unit 110, specifically, along an outer periphery of a front lens 120 (not shown in Fig. 2 but see Fig. 3). In the embodiment, the handle cover 190 constitutes an outer periphery cover.

Fig. 3 is an exploded, perspective view showing the headlight unit 110. As shown in Fig. 3, the headlight unit 110 includes the front lens 120, a headlight body 130, and a headlight bracket 140.

The front lens 120 is made of a transparent, synthetic resin. Light radiated from a headlight bulb 210 or the like is transmitted through the front lens 120 to irradiate the front of the motorcycle 10. That is, the front lens 120 is arranged forwardly of the headlight bulb 210 in a state of being mounted on the motorcycle 10. In the embodiment, the headlight bulb 210 constitutes a light source.

The headlight body 130 is composed of a headlight reflector portion 131, left and right position lamp reflector portions 132L, 132R, and left and right flasher reflector portions 133L, 133R.

The headlight reflector portion 131 reflects light radiated from the headlight bulb 210 mounted to the reflector portion 131. In the embodiment, the reflector portion 131 constitutes a reflector.

The position lamp reflector portions 132L, 132R reflect light radiated from respective position lamps 220L, 220R mounted to the reflector portions 132L, 132R. In the embodiment shown, one or both of the position lamps 220L, 220R constitute an auxiliary light source. Also, one or both of the reflector portions 132L, 132R constitute an outer reflector.

Each position lamp 220L, 220R is located in a position of the motorcycle 10 which can be readily recognized by other vehicles or the like. The position lamps 220L, 220R are lower in light intensity than the headlight bulb 210. In the embodiment shown, auxiliary lamps are constituted by respective reflector portions 132L, 132R and position lamps 220L, 220R. The reflector portions 132L, 132R and the position lamps 220L, 220R are arranged outside the reflector portion 131 and the headlight bulb 210.

The flasher reflector portions 133L, 133R reflect light radiated from respective flasher bulbs 230L, 230R mounted to the reflector portions 133L, 133R.

The flasher bulbs 230L, 230R flash as required to indicate an intended direction of travel of the motorcycle 10, specifically, a left direction or a right direction. The flasher bulbs 230L, 230R are mounted to respective reflector portions 133L, 133R provided outside the position lamp reflector portions 132L, 132R.

In the embodiment shown, a direction indicator lamp is constituted by one or both of the reflector portions 133L, 133R and the flasher bulbs 230L, 230R. The reflector portions 133L, 133R and the flasher bulbs 230L, 230R are arranged outside the reflector portions 132L, 132R and the position lamps 220L, 220R.

The headlight bracket 140 supports the front lens 120 and the headlight body 130 to enable moving the same in a vertical direction, that is, to enable aiming. Also, the headlight bracket 140 is fixed to the handle cover 190.

A shielding wall 150 is arranged between the front lens 120 and the headlight body 130. A left louver 160L is arranged laterally leftward of the shielding wall 150. A right louver 160R is arranged laterally rightward of the shielding wall 150.

The shielding wall 150 intercepts light radiated from the headlight bulb 210 and light reflected by the reflector portion 131. The shielding wall 150 is arranged between the front lens 120 and the headlight reflector portion 131. Also, the shielding wall 150 is arranged between the front lens 120 and the headlight bulb 210.

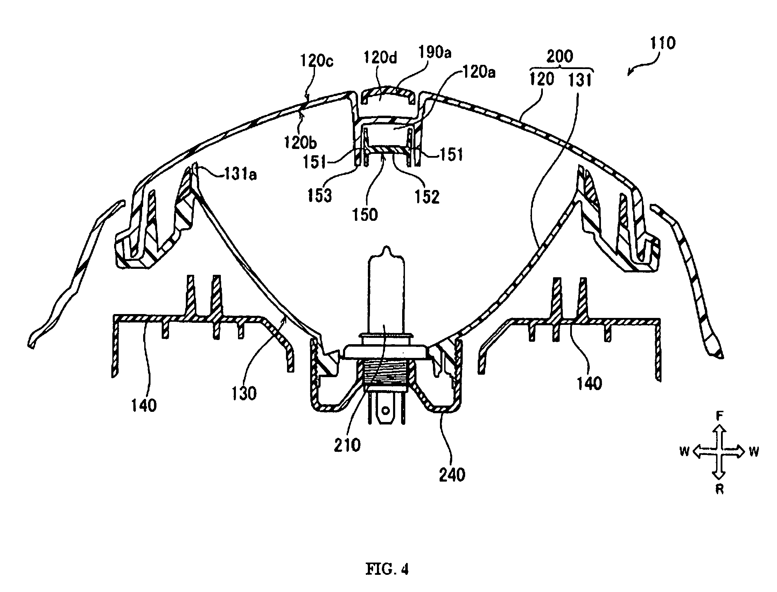

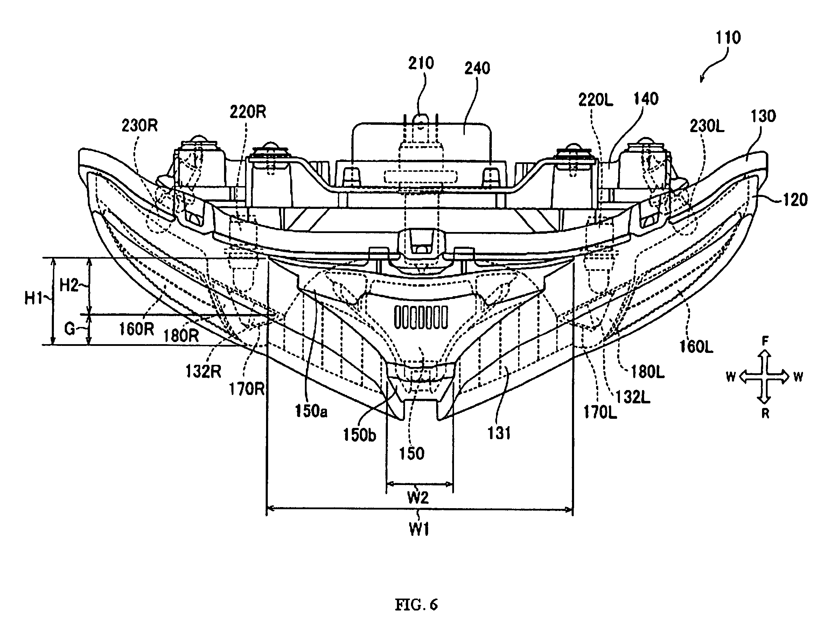

The louvers 160L, 160R are formed from a plurality of plate-shaped portions (not shown), which extend in a vehicle width direction (W direction shown in Figs. 4 and 6), to restrict a traveling direction of light radiated from the respective flasher bulbs 230L, 230R to a predetermined direction.

Also, a socket cover 240, which covers a base (not shown) of the headlight bulb 210, is mounted to a rear portion of the headlight body 130.

### (2.2) Shape of and state of arrangement of shielding wall

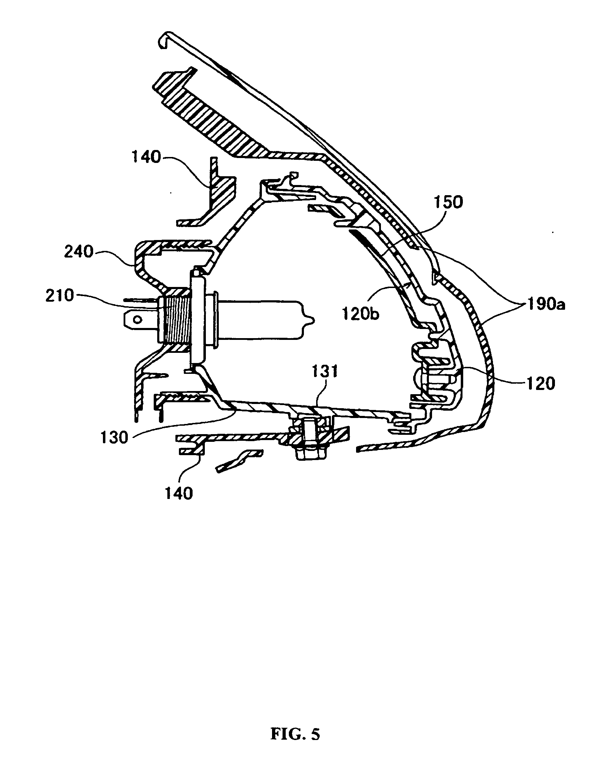

An explanation will now be given to a shape of and a state of arrangement of the shielding wall 150 mainly with reference to Figs. 4 to 6. Fig. 4 is a cross sectional view taken along the line F4-F4 in Fig. 2. Fig. 5 is a cross sectional view taken along the line F5-F5 in Fig. 2. Fig. 6 is a plan view showing the headlight unit 110.

As shown in Fig. 4, a lamp body 200 is constituted by the front lens 120 and the headlight reflector portion 131. The lamp body 200 extends in the vehicle width direction (W direction in the figure) when the headlight unit 110 is mounted on the motorcycle 10. That is, the lamp body 200 is shaped to have a larger width than height. The headlight bulb 210 is arranged substantially centrally of the lamp body 200 in a width direction (W direction).

The shielding wall 150 is arranged forwardly of the headlight bulb 210, specifically, on the front of the headlight bulb 210. As shown in Figs. 4 and 5, an inner recess 120a being concave toward the front is formed on an inner side 120b of the front lens 120. The shielding wall 150 enters into the inner recess 120a. Also, as shown in Fig. 5, the shielding wall 150 is arranged along the inner side 120b of the front lens 120.

A lens cover portion 190a is arranged outside the front lens 120 and forwardly of the shielding wall 150. The lens cover portion 190a constitutes a part of the handle cover 190 (see Fig. 2). An outer recess 120d being concave rearward is formed on an outer side 120c of the front lens 120. The lens cover portion 190a enters into the outer recess 120d.

Also, the shielding wall 150 is heat-resistant to withstand heat generated from the headlight bulb 210. In the embodiment, the shielding wall 150 is formed from PBT resin.

As shown in Fig. 4, the shielding wall 150 includes, in cross section along the vehicle width direction (W direction), a pair of longitudinal wall portions 151 extending in a longitudinal direction (F-R direction in the figure), and a widthwise wall portion 152 provided between the pair of longitudinal wall portions 151 to connect between central portions of the longitudinal wall portions 151 in the longitudinal direction. Also, rear ends 153 of the shielding wall 150 are positioned rearwardly of front ends 131a of the reflector portion 131.

As shown in Fig. 6, a lateral width W1 of an upper portion 150a of the shielding wall 150 in the vehicle width direction is larger than a lateral width W2 of a lower portion 150b of the shielding wall 150 in the vehicle width direction. In the embodiment, as shown in Figs. 2, 3, and 6, the shielding wall 150 is gradually increased in lateral width toward the upper portion 150a from the lower portion 150b. That is, the shielding wall 150 is shaped to be inverse-trapezoidal as viewed in front view such that a trapezoid is inversed.

### (2.3) Shape of reflector portion

The shapes of the headlight reflector portion 131, the left and right position lamp reflector portions 132L, 132R, and the left and right flasher reflector portions 133L, 133R will now be further described with reference to Fig. 6.

As shown in Fig. 6, a left and right partitions 170L, 170R are provided at a boundary between the headlight reflector portion 131 and a respective position lamp reflector portion 132L, 132R to partition the headlight reflector portion 131 and the respective reflector portions 132L, 132R. In the embodiment shown, the partitions 170L, 170R constitute inner partition portions. A clearance G (predetermined clearance) is defined between each partition 170L, 170R and the inner side 120b of the front lens 120.

Left and right partitions 180L, 180R are provided at boundaries between a direction indicator lamp, which is constituted by the reflector portions 133L, 133R and respective flasher bulbs 230L, 230R, and an auxiliary lamp, which is constituted by the reflector portions 132L, 132R and respective position lamps 220L, 220R, to partition a direction indicator lamp (specifically, the reflector portions 133L, 133R) and an auxiliary lamp (specifically, the reflector portions 132L, 132R). In the embodiment, the partitions 180L, 180R constitute an outer partition portion.

A height H1 of the partitions 180L, 180R is larger than a height H2 of the partitions 170L, 170R.

With the headlight unit 110, the shielding wall 150 is arranged between the front lens 120 and the headlight reflector portion 131, so that the headlight bulb 210 can be made hard to directly and visually recognize from the front of the headlight unit 110. Also, since the shielding wall 150 is arranged between the front lens 120 and the headlight reflector portion 131, it is possible to have the headlight unit 110 visually recognized as if it were formed from a plurality of lamp bodies. That is, with the headlight unit 110, it is possible to have it visually recognized as if it had a lamp body using a plurality of light sources, while a single headlight bulb 210 is used.

In the embodiment, the shielding wall 150 is arranged between the front lens 120 and the headlight bulb 210. Also, the shielding wall 150 is arranged on the front of the headlight bulb 210. The headlight bulb 210 is arranged substantially centrally of the lamp body 200 in a width direction (W direction). Further, the lateral width W1 of the upper portion 150a of the shielding wall 150 is larger than the lateral width W2 of the lower portion 150b.

Therefore, the headlight bulb 210 can be made further hard to directly and visually recognize from the front of the headlight unit 110. Also, the shielding wall 150 is gradually increased in lateral width toward the upper portion 150a from the lower portion 150b. Therefore, while suppressing influences of light radiated from the headlight bulb 210 on light distribution, the headlight bulb 210 can be made hard to directly and visually recognize from the front of the headlight unit 110 and from above the front.

The shielding wall 150 is arranged along the inner side 120b of the front lens 120. Therefore, it is possible to prevent the shielding wall 150 from excessively approaching the headlight bulb 210 to have adverse influences on distribution of light radiated from the headlight bulb 210.

A rear end 153 of the shielding wall 150 is positioned rearwardly of the front ends 131a of the reflector portion 131. That is, the headlight unit 110 cannot be visually recognized on one side (right side) over the front lens 120 from the other side (for example, a left side). Therefore, the shielding wall 150 and the headlight reflector portion 131 are made look like being connected to each other, so that it cannot be readily recognized that the single headlight bulb 210 is provided even in the case where the front lens 120 is looked in.

The shielding wall 150 is heat-resistant to withstand heat generated from the headlight bulb 210. Specifically, the shielding wall 150 is formed from PBT resin. Therefore, it is possible to position the shielding wall 150 close to the headlight bulb 210 while preventing excessively approaching the headlight bulb 210 to have adverse influences on distribution of light radiated from the headlight bulb 210.

The shielding wall 150 enters into the inner recess 120a formed on the inner side 120b of the front lens 120. Also, the shielding wall 150 includes the pair of longitudinal wall portions 151 and the widthwise wall portion 152 provided between the pair of longitudinal wall portions 151 to connect between the central portions of the longitudinal wall portions 151.

That is, as shown in Fig. 4, the shielding wall 150 is substantially H-shaped in cross section along a widthwise direction of the headlight unit 110. Therefore, it is possible to inhibit heat of the headlight bulb 210 from being transmitted to the shielding wall 150. Also, the shielding wall 150 enters into the inner recess 120a to provide a predetermined clearance between it and the inner recess 120a. Therefore, it is possible to inhibit heat of the headlight bulb 210 from being transmitted to the front lens 120 through the shielding wall 150.

The lens cover portion 190a is arranged forwardly of the shielding wall 150. Also, the outer recess 120d being concave rearward is formed on the outer side 120c of the front lens 120 and the lens cover portion 190a enters into the outer recess 120d. Therefore, it is possible to make the lens cover portion 190a approach the shielding wall 150.

When the lens cover portion 190a arranged on the outer side 120c of the front lens 120 approaches the shielding wall 150, it is not possible to readily visually recognize the shielding wall 150 from outside the headlight unit 110, so that the motorcycle 10 is made favorable in outward appearance.

The auxiliary lamps, specifically, the position lamp reflector portions 132L, 132R and the position lamps 220L, 220R are arranged outside the lamp body 200. That is, the position lamps 220L, 220R are positioned outside the lamp body 200, specifically, on both left and right sides of the lamp body 200. Therefore, while the single headlight bulb 210 is used, it is possible to have the headlight unit 110 visually recognized as if it had a plurality of lamp bodies.

Further, the clearance G specified above is defined between the partitions 170L, 170R and the inner side 120b of the front lens 120. Light of the position lamps 220L, 220R reaches that left side portion (and also the corresponding right side portion) of the lamp body 200, which is compartmented by the shielding wall 150, through the clearance G. Therefore, while the single headlight bulb 210 is used, it is possible to have the headlight unit 110 visually recognized as if it had a plurality of lamp bodies.

In the embodiment, the height H1 of the partitions 180L, 180R is larger than the height H2 of the partitions 170L, 170R. Therefore, even in the case where the direction indicator lamp (the reflector portions 133L, 133R and the respective flasher bulbs 230L, 230R) is arranged outside the auxiliary lamp (the reflector portions 132L, 132R and the respective position lamps 220L, 220R), it is possible to surely discriminate between the direction indicator lamp and the auxiliary lamp.

### Other embodiments

As described above, while the contents of the invention have been disclosed through the embodiment of the invention, it should be understood that the invention is not limited by those descriptions and drawings, which constitute a part of the disclosure. Various alternative embodiments will be made apparent to those skilled in the art from the disclosure.

For example, in the embodiment, the direction indicator lamp (the reflector portions 133L, 133R and respective flasher bulbs 230L, 230R) and the auxiliary lamp (the reflector portions 132L, 132R and respective position lamps 220L, 220R) are arranged outside the lamp body 200, it does not matter whether the direction indicator lamp or the auxiliary lamp is not arranged outside the lamp body 200.

The shape of the shielding wall 150 shown in the embodiment is exemplary and the shape of the shielding wall 150 may be changed according to a kind of the motorcycle 10 and a shape of a headlight unit.

While the shielding wall 150 in the embodiment is formed by the use of PBT resin, the shielding wall 150 may be formed by the use of other heat-resistant resins. Alternatively, heat-resistant coating may be applied to the shielding wall 150.

While the lamp body 200 in the embodiment is shaped to have a larger width than height, the lamp body 200 may be shaped to have a larger height than width.

In this manner, the invention includes, of course, various embodiments not described herein. Accordingly, the scope of the invention should be determined only by inventive, specified matters according to the appended claims, which are appropriate in the light of the descriptions.

### Description of Reference Numerals and Signs

10: motorcycle, 20: front wheel, 21: front fork, 40: handle, 50: engine, 70: rear wheel, 100: handle assembly, 110: headlight unit, 120: front lens, 120a: inner recess, 120b: inner side, 120c: outer side, 120d: outer recess, 130: headlight body, 131: reflector portion, 131a: front end, 132L, 132R, 133L, 133R: reflector portion, 140: headlight bracket, 150: shielding wall, 150a: upper portion, 150b: lower portion, 151: longitudinal wall portion, 152: widthwise wall portion, 153: rear end, 160L, 160R: louver, 170L, 170R, 180L, 180R: partition, 190: handle cover, 190a: lens cover portion, 200: lamp body, 210: headlight bulb, 220L, 220R: position lamp, 230L, 230R: flasher bulb, 240: socket cover, G: clearance

## Claims

1. A headlight device (110) comprising:
a light source (210);
a lamp body (200) including a reflector (131) for reflecting light radiated from the light source (210);
a front lens (120) arranged forwardly of the light source (210); and
a shielding wall (150) for shielding at least one of light radiated from the light source (210) and light reflected by the reflector (131); wherein
the shielding wall (150) is arranged between the front lens (120) and the reflector (131), along an inner side of the front lens (120); **characterised in that**
the shielding wall (150) is attached to the front lens (120); and
the shielding wall (150) is gradually increased in width toward the upper portion (150a) from the lower portion (150b).

2. The headlight device (110) according to claim 1, wherein the light source (210) is arranged substantially centrally of the lamp body (200) in a widthwise direction.

3. The headlight device (110) according to any preceding claim, wherein the lamp body (200) extends in a vehicle width direction when the headlight device (110) is mounted on a vehicle (10), and a width of an upper portion (150a) of the shielding wall (150) in the vehicle width direction is larger than a width of a lower portion (150b) of the shielding wall (150) in the vehicle width direction.

4. The headlight device (110) according to any preceding claim, wherein a rear end (153) of the shielding wall (150) is positioned rearwardly of a front end (131a) of the reflector.

5. The headlight device (110) according to any preceding claim, wherein the shielding wall (150) comprises a heat-resistant material.

6. The headlight device (110) according to any preceding claim, wherein an inner recess (120a) is formed on an inner side (120b) of the front lens (120) and is concave toward the front, and the shielding wall (150) enters into the inner recess (120a).

7. The headlight device (110) according to any preceding claim, further comprising an outer periphery cover (190) arranged along an outer periphery of the front lens (120) and including a lens cover portion (190a) arranged outside the front lens (120) and forwardly of the shielding wall (150), wherein an outer recess (120d) is formed on an outer side (120c) of the front lens (120) to be concave rearward and the lens cover portion (190a) enters into the outer recess (120d).

8. The headlight device (110) according to any preceding claim, wherein the shielding wall (150) includes, in cross section along a vehicle width direction when in use, a pair of longitudinal wall portions (151) extending in a longitudinal direction and a widthwise wall portion (152) provided between the pair of longitudinal wall portions (151) to connect between central portions of the longitudinal wall portions (151) in the longitudinal direction.

9. The headlight device (110) according to any preceding claim, further comprising an auxiliary lamp (132L, 132R, 220L, 220R) arranged outside the lamp body (200).

10. The headlight device (110) according to claim 9, wherein the auxiliary lamp (132L, 132R, 220L, 220R) includes an auxiliary light source (220L, 220R) and an outer reflector (132L, 132R) provided outside the reflector (131) to reflect light of the auxiliary light source (220L, 220R).

11. The headlight device (110) according to claim 10, wherein an inner partition portion (170L, 170R) is provided at a boundary of the reflector (131) and the outer reflector (132L, 132R) to partition the reflector (131) and the outer reflector (132L, 132R), and a predetermined clearance is defined between the inner partition portion (170L, 170R) and an inner side (120b) of the front lens (120).

12. The headlight device (110) according to claim 11, further comprising:
a direction indicator lamp (133L, 133R, 230L, 230R) for indicating a travelling direction of an associated vehicle (10), wherein the direction indicator lamp (133L, 133R, 230L, 230R) is arranged outside the auxiliary lamp (132L, 132R, 220L, 220R);
an outer partition portion (180L, 180R) provided at a boundary of the direction indicator lamp (133L, 133R, 230L, 230R) and the auxiliary lamp (132L, 132R, 220L, 220R) to partition the direction indicator lamp (133L, 133R, 230L, 230R) and the auxiliary lamp (132L, 132R, 220L, 220R), wherein a height of the outer partition portion (180L, 180R) is larger than a height of the inner partition portion (170L, 170R).

13. A vehicle (10) comprising a headlight device (110) according to any one of claims 1 to 12.

## Patentansprüche

1. Scheinwerfervorrichtung (110), die aufweist:
eine Lichtquelle (210);
ein Lampengehäuse (200), das einen Reflektor (131) für das Reflektieren des Lichtes umfasst, das von der Lichtquelle (210) abgestrahlt wird;
eine Frontlinse (120), die vor der Lichtquelle (210) angeordnet ist; und
eine Abschirmwand (150) für das Abschirmen von mindestens einem von dem Licht, das von der Lichtquelle (210) abgestrahlt wird, und dem Licht, das vom Reflektor (131) reflektiert wird; wobei
die Abschirmwand (150) zwischen der Frontlinse (120) und dem Reflektor (131) längs einer Innenseite der Frontlinse (120) angeordnet ist; **dadurch gekennzeichnet, dass**
die Abschirmwand (150) an der Frontlinse (120) befestigt ist; und
die Abschirmwand (150) allmählich in ihrer Breite in Richtung des oberen Abschnittes (150a) vom unteren Abschnitt (150b) vergrößert wird.

2. Schweinwerfervorrichtung (110) nach Anspruch 1, bei der die Lichtquelle (210) im Wesentlichen mittig vom Lampengehäuse (200) in einer Breitenrichtung angeordnet ist.

3. Scheinwerfervorrichtung (110) nach einem der vorhergehenden Ansprüche, bei der sich das Lampengehäuse (200) in einer Breitenrichtung des Fahrzeuges erstreckt, wenn die Scheinwerfervorrichtung (110) an einem Fahrzeug (10) montiert ist, und wobei eine Breite eines oberen Abschnittes (150a) der Abschirmwand (150) in der Breitenrichtung des Fahrzeuges größer ist als eine Breite eines unteren Abschnittes (150b) der Abschirmwand (150) in der Breitenrichtung des Fahrzeuges.

4. Scheinwerfervorrichtung (110) nach einem der vorhergehenden Ansprüche, bei der ein hinteres Ende (153) der Abschirmwand (150) nach hinten von einem vorderen Ende (131a) des Reflektors positioniert ist.

5. Scheinwerfervorrichtung (110) nach einem der vorhergehenden Ansprüche, bei der die Abschirmwand (150) ein wärmebeständiges Material aufweist.

6. Scheinwerfervorrichtung (110) nach einem der vorhergehenden Ansprüche, bei der eine innere Aussparung (120a) auf einer Innenseite (120b) der Frontlinse (120) ausgebildet und in Richtung der Vorderseite konkav ist, und wobei die Abschirmwand (150) in die innere Aussparung (120a) gelangt.

7. Scheinwerfervorrichtung (110) nach einem der vorhergehenden Ansprüche, die außerdem eine Außenrandabdeckung (190) aufweist, die längs eines Außenrandes der Frontlinse (120) angeordnet ist und einen Linsenabdeckabschnitt (190a) umfasst, der außerhalb der Frontlinse (120) und nach vorn von der Abschirmwand (150) angeordnet ist, wobei eine äußere Aussparung (120d) auf einer Außenseite (120c) der Frontlinse (120) ausgebildet ist, so dass sie nach hinten konkav ist, und wobei der Linsenabdeckabschnitt (190a) in die äußere Aussparung (120d) gelangt.

8. Scheinwerfervorrichtung (110) nach einem der vorhergehenden Ansprüche, bei der die Abschirmwand (150) im Querschnitt längs einer Breitenrichtung des Fahrzeuges, wenn eine Benutzung erfolgt, ein Paar longitudinaler Wandabschnitte (151), die sich in einer Längsrichtung erstrecken, und einen sich in der Breitenrichtung erstreckenden Wandabschnitt (152) umfasst, der zwischen dem Paar der longitudinalen Wandabschnitte (151) vorhanden ist, um zwischen den mittleren Abschnitten der longitudinalen Wandabschnitte (151) in der Längsrichtung eine Verbindung herzustellen.

9. Scheinwerfervorrichtung (110) nach einem der vorhergehenden Ansprüche, die außerdem eine Hilfslampe (132L, 132R, 220L, 220R) aufweist, die außerhalb des Lampengehäuses (200) angeordnet ist.

10. Scheinwerfervorrichtung (110) nach Anspruch 9, bei der die Hilfslampe (132L, 132R, 220L, 220R) eine Hilfslichtquelle (220L, 220R) und einen äußeren Reflektor (132L, 132R) umfasst, die außerhalb des Reflektors (131) vorhanden sind, um das Licht von der Hilfslichtquelle (220L, 220R) zu reflektieren.

11. Scheinwerfervorrichtung (110) nach Anspruch 10, bei der ein innerer Trennwandabschnitt (170L, 170R) an einer Grenze des Reflektors (131) und des äußeren Reflektors (132L, 132R) vorhanden ist, um den Reflektor (131) und den äußeren Reflektor (132L, 132R) zu trennen, und wobei ein vorgegebener Abstand zwischen dem inneren Trennwandabschnitt (170L, 170R) und einer Innenseite (120b) der Frontlinse (120) definiert wird.

12. Scheinwerfervorrichtung (110) nach Anspruch 11, die außerdem aufweist:
eine Richtungsanzeigelampe (133L, 133R, 230L, 230R) für das Anzeigen einer Bewegungsrichtung eines dazugehörenden Fahrzeuges (10), wobei die Richtungsanzeigelampe (133L, 133R, 230L, 230R) außerhalb der Hilfslampe (132L, 132R, 220L, 220R) angeordnet ist;
einen äußeren Trennwandabschnitt (180L, 180R), der an einer Grenze der Richtungsanzeigelampe (133L, 133R, 230L, 230R) und der Hilfslampe (132L, 132R, 220L, 220R) vorhanden ist, um die Richtungsanzeigelampe (133L, 133R, 230L, 230R) und die Hilfslampe (132L, 132R, 220L, 220R) zu trennen, wobei eine Höhe des äußeren Trennwandabschnittes (180L, 180R) größer ist als eine Höhe des inneren Trennwandabschnittes (170L, 170R).

13. Fahrzeug (10), das eine Scheinwerfervorrichtung (110) nach einem der Ansprüche 1 bis 12 aufweist.

## Revendications

1. Dispositif de phare (110), comprenant :
une source de lumière (210) ;
un corps de lampe (200), englobant un réflecteur (131) pour réfléchir la lumière émise par la source de lumière (210) ;
une lentille avant (120), agencée vers l'avant de la source de lumière (210) ; et
une paroi formant écran (150), pour faire écran à au moins une lumière, la lumière émise par la source de lumière (210) ou la lumière réfléchie par le réflecteur (131), dans lequel
la paroi formant écran (150) est agencée entre la lentille avant (120) et le réflecteur (131), le long d'un côté interne de la lentille avant (120), **caractérisé en ce que** :
la paroi formant écran (150) est fixée sur la lentille avant (120) ; et
la paroi formant écran (150) a une largeur progressivement accrue vers la partie supérieure (150a) à partir de la partie inférieure (150b).

2. Dispositif de phare (110) selon la revendication 1, dans lequel la source de lumière (210) est agencée de manière essentiellement centrale par rapport au corps de la lampe (200) dans une direction de la largeur.

3. Dispositif de phare (110) selon l'une quelconque des revendication précédentes, dans lequel le corps de la lampe (200) s'étend dans une direction de la largeur du véhicule lorsque le dispositif de phare (110) est monté sur un véhicule (10), une largeur d'une partie supérieure (150a) de la paroi formant écran (150) dans la direction de la largeur du véhicule étant supérieure à une largeur d'une partie inférieure (150b) de la paroi formant écran (150) dans la direction de la largeur du véhicule.

4. Dispositif de phare (110) selon l'une quelconque des revendications précédentes, dans lequel une extrémité arrière (153) de la paroi formant écran (150) est positionnée vers l'arrière d'une extrémité avant (131a) du réflecteur.

5. Dispositif de phare (110) selon l'une quelconque des revendications précédentes, dans lequel la paroi formant écran (150) comprend un matériau résistant à la chaleur.

6. Dispositif de phare (110) selon l'une quelconque des revendications précédentes, dans lequel un évidement interne (120a) est formé sur un côté interne (120b) de la lentille avant (120) et est concave vers l'avant, la paroi formant écran (150) rentrant dans l'évidement interne (120a).

7. Dispositif de phare (110) selon l'une quelconque des revendications précédentes, comprenant en outre un couvercle de périphérie externe (190), agencé le long d'une périphérie externe de la lentille avant (120) et englobant une partie de couverture de la lentille (190a), agencée à l'extérieur de la lentille avant (120) et vers l'avant de la paroi formant écran (150), dans lequel un évidement externe (120d) est formé sur un côté externe (120c) de la lentille avant (120), de sorte à être concave vers l'arrière, la partie de couverture de la lentille (190a) rentrant dans l'évidement externe (120d).

8. Dispositif de phare (110) selon l'une quelconque des revendications précédentes, dans lequel la paroi formant écran (150) englobe, en section transversale le long d'une direction de la largeur du véhicule en service, une paire de parties de paroi longitudinales (151) s'étendant dans une direction longitudinale, et une partie de paroi dans le sens de la largeur (152), agencée entre la paire de parties de paroi longitudinales (151), en vue d'une connexion entre les parties centrales des parties de paroi longitudinales (151) dans la direction longitudinale.

9. Dispositif de phare (110) selon l'une quelconque des revendications précédentes, comprenant en outre une lampe auxiliaire (132L, 132R, 220L, 220R), agencée à l'extérieur du corps de la lampe (200).

10. Dispositif de phare (110) selon la revendication 9, dans lequel la lampe auxiliaire (132L, 132R, 220L, 220R) englobe une source de lumière auxiliaire (220L, 220R) et un réflecteur externe (132L, 132R), agencés à l'extérieur du réflecteur (131) pour réfléchir la lumière de la source de lumière auxiliaire (220L, 220R).

11. Dispositif de phare (110) selon la revendication 10, dans lequel une partie de séparation interne (170L, 170R) est agencée au niveau d'une limite entre le réflecteur (131) et le réflecteur externe (132L, 132R) pour séparer le réflecteur (131) et le réflecteur externe (132L, 132R), un dégagement prédéterminé étant défini entre la partie de séparation interne (170L, 170R) et un côté interne (120b) de la lentille avant (120).

12. Dispositif de phare (110) selon la revendication 11, comprenant en outre :
une lampe d'indication de la direction (133L, 133R, 230L, 230R) pour indiquer une direction de roulement d'un véhicule associé (10), dans lequel la lampe d'indication de la direction (133L, 133R, 230L, 230R) est agencée à l'extérieur de la lampe auxiliaire (132L, 132R, 220L, 220R) ;
une partie de séparation externe (180L , 180R), agencée au niveau d'une limite entre la lampe d'indication de la direction (133L, 133R, 230L, 230R) et la lampe auxiliaire (132L, 132R, 220L, 220R), pour séparer la lampe d'indication de la direction (133L, 133R, 230L, 230R) et la lampe auxiliaire (132L, 132R, 220L, 220R), dans lequel une hauteur de la partie de séparation externe (180L, 180R) est supérieure à une hauteur de la partie de séparation interne (170L, 170R).

13. Véhicule (10), comprenant un dispositif de phare (110) selon l'une quelconque des revendications 1 à 12.
